Europäisches Patentamt

European Patent Office

Office européen des brevets

(11) Numéro de publication: **0 226 507**
**B1**

(12) **FASCICULE DE BREVET EUROPEEN**

(45) Date de publication du fascicule du brevet:
03.10.90

(21) Numéro de dépôt: 86402673.7

(22) Date de dépôt: 02.12.86

(51) Int. Cl.⁵: **G06K 9/68**

(54) **Procédé d'identification de structures arborescentes dans des images numériques et son application à un dispositif de traitement d'images.**

(30) Priorité: **04.12.85 FR 8517946**

(43) Date de publication de la demande:
**24.06.87 Bulletin 87/26**

(45) Mention de la délivrance du brevet:
**03.10.90 Bulletin 90/40**

(84) Etats contractants désignés:
**DE NL**

(56) Documents cités:
**INFORMATION PROCESSING LETTERS,
vol. 6, no. 6, décembre 1977, pages 184-186, Knoxville,
US; S.M. SELKOW: "The tree-to-tree editing problem"
IEEE TRANSACTIONS ON PATTERN ANALYSIS AND
MACHINE INTELLIGENCE, vol.
PAMI-7, no. 3, mai 1985, pages 299-305, IEEE, New York,
US; Y.C. CHENG et al.: "Waveform correlation by tree
matching"**

(73) Titulaire: **THOMSON-CGR, 13, square Max-Hymans,
F-75015 Paris(FR)**

(72) Inventeur: **Catros, Jean-Yves, Thomson-CSF
SCPI 19, avenue de Messine, F-75008 Paris(FR)**
Inventeur: **Mischler, Denis, Thomson-CSF
SCPI 19, avenue de Messine, F-75008 Paris(FR)**

(74) Mandataire: **Turlèque, Clotilde et al, THOMSON-CSF
SCPI, F-92045 PARIS LA DEFENSE CEDEX 67(FR)**

## Description

L'invention se rapporte au domaine de la reconnaissance de formes dans des images, et plus particulièrement à l'identification de structures arborescentes. Elle s'applique au traitement d'images numériques, notamment dans le domaine médical, par exemple pour l'identification des vaisseaux sanguins sur des images obtenues par angiographie numérique.

De nombreux problèmes de reconnaissance de forme peuvent se ramener à l'étude de structures arborescentes, la reconnaissance étant obtenue lorsqu'il est possible de faire correspondre une structure dite "modèle" à une structure "objet" détectée dans l'image à traiter.

L'invention a pour objet un procédé d'identification de structures arborescentes dans des images numériques. Pour cela, les données détectées dans l'image d'une part et celles du modèle d'autre part doivent être représentées conventionnellement de la même manière, par un ensemble de données caractérisant une structure arborescente.

Il existe une méthode dite "méthode de Selkow" décrite par exemple par l'article intitulé "Selkow : tree to tree editing problem" tiré de "Information Processing letters" volume 6, numéro 6, décembre 1977, pp 184–186, qui permet de comparer deux structures arborescentes en évaluant une "distance" entre les deux structures.

Le procédé selon l'invention utilise cette méthode pour trouver, une distance minimale entre deux arbres, puis détermine le chemin conduisant à cette distance minimale, pour aboutir à l'identification entre la structure arborescente objet et le modèle auquel on cherche à l'identifier.

L'invention concerne un procédé d'identification de structures arborescentes, par lequel les branches d'un arbre objet peuvent être identifiées à celles d'un arbre modèle, ces deux arbres étant définis sous forme d'une racine et d'une liste de sous-arbres disjoints, formés chacun de la même manière ou éventuellement réduits à une branche, et chacune des branches étant affectée d'un vecteur étiquette dont les composantes sont fonction des caractéristiques de ces branches, au cours duquel:

- dans une première phase, l'arbre objet est transformé en l'arbre modèle par une suite d'opérations élémentaires sur l'ensemble des sous-arbres, chaque opération étant affectée d'un coût fonction des composantes des vecteurs étiquettes des branches constituant les sous-arbres, ces opérations étant soit des changements d'étiquette, soit des insertions de sous-arbres de l'arbre modèle, soit des destructions de sous-arbres de l'arbre objet, et la suite d'opérations la moins coûteuse est sélectionnée, dont le coût global mesure la distance entre les arbres selon la méthode itérative dite de "Selkow".

L'invention est caractérisée en ce que pour l'identification de structures arborescentes détectées dans des images numériques le procédé reprend, dans une seconde phase, la suite d'opérations la moins coûteuse en sens inverse à partir de la dernière opération effectuée, de façon à réaliser, pour chaque étape du calcul itératif, et selon l'opération élémentaire qui a permis d'obtenir le coût minimal

- soit un changement d'étiquette: une sous-arbre de l'arbre objet étant identifié à un sous-arbre de l'arbre modèle;
- soit l'insertion d'un sous-arbre de l'arbre modèle, dans ce cas il n'y a pas de sous-arbre correspondant dans l'arbre objet;
- soit la destruction d'un sous-arbre de l'arbre objet; dans ce cas il n'y a pas de sous-arbre correspondant dans l'arbre modèle;

le résultat de l'identification étant formé par l'ensemble des étiquettes de l'arbre modèle affectées aux sous-arbres de l'arbre objet réduits à leur racine obtenus dans cette seconde phase.

L'invention a également pour objet l'utilisation de ce procédé dans un dispositif de traitement d'images numériques, par exemple pour la reconnaissance des vaisseaux sanguins dans des images obtenues par angiographie numérique.

L'invention sera mieux comprise à l'aide de la description qui suit en référence aux figures annexées.

La figure 1 représente un exemple d'arbre modèle;
La figure 2 est le schéma des relations entre les branches de l'arbre représenté sur la figure 1;
La figure 3 représente un exemple d'arbre objet détecté dans une image numérique ;
La figure 4 représente le schéma des relations entre les branches de l'arbre objet représenté sur la figure 3 .
Les figures 5 à 12 sont des tableaux illustrant le calcul de la distance entre deux arbres.

Pour le procédé d'identification de structures arborescentes dans une image numérique suivant l'invention, les données caractéristiques de ces structures dans l'image et dans le modèle sont représentées conventionnellement de la même manière, selon le schéma suivant :

Une structure en forme d'arbre est définie par une racine, qui est par exemple la partie entre deux lignes quasi-parallèles ayant la plus grande largeur, et des branches également formées par des couples de lignes quasi-parallèles reliées à la racine elle-même ou à d'autres branches par des arcs, chaque branche étant la racine de sous-arbre.

Chaque branche d'un arbre est caractérisée par un vecteur dit vecteur étiquette dont les composantes sont des paramètres caractéristiques ; par exemple dans des images obtenues par angiographie numérique, chaque branche représente un vaisseau sanguin pour laquelle le vecteur étiquette peut comporter des composantes telles que la largeur, la longueur, la forme, du vaisseau considéré auquel on associe également le nom de vaisseau.

Les données extraites de l'image numérique sont structurées de la même manière par détection puis paramètrisation des contours dans l'image, détection des branches par reconnaissance de lignes quasi-parallèles dans l'image, puis formation du schéma des relations entre les branches, chaque branche étant représentée par un vecteur étiquette dont les composantes ont la même structure que celles de l'arbre modèle.

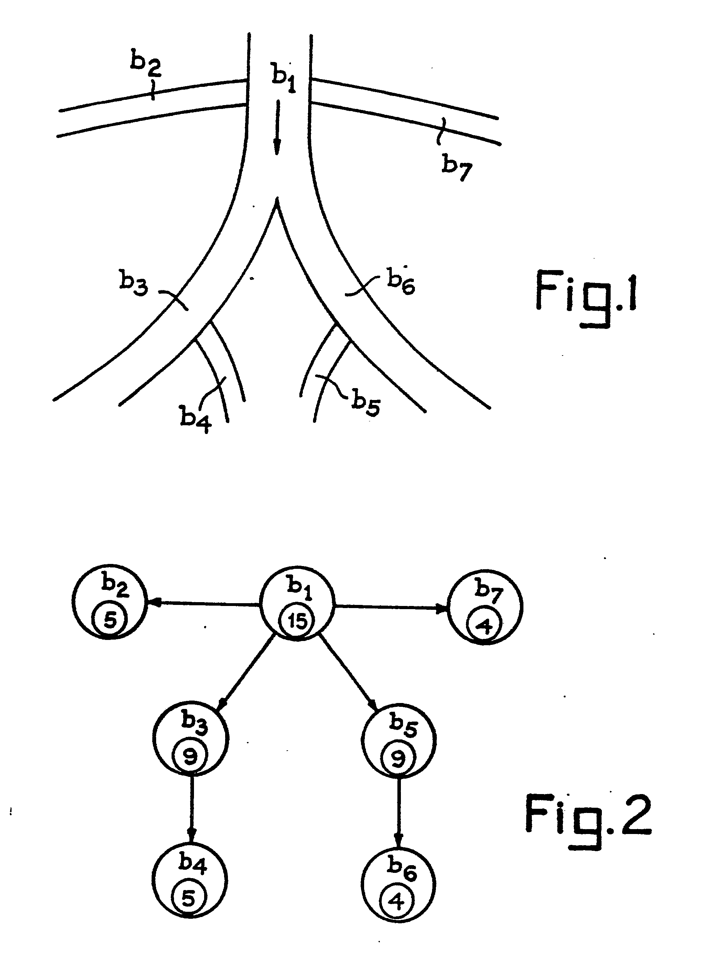

La figure 1 représente un exemple d'arbre modèle T : chaque branche $b_i$ a un vecteur étiquette noté $E_i$, i = 1 à 7 ; $b_1$ est la racine, $b_2$, $b_3$, $b_6$ et $b_7$ sont des branches reliées à la racine $b_1$, $b_4$ est reliée à $b_3$ et $b_5$ est reliée à $b_6$. L'étiquette de la racine de T, $b_1$ dans l'exemple ci-desus est notée E(T).

La figure 2 représente les relations entre ces branches telles qu'elles apparaissent sur la figure 1. Chaque branche est un noeud dans ce graphe des relations.

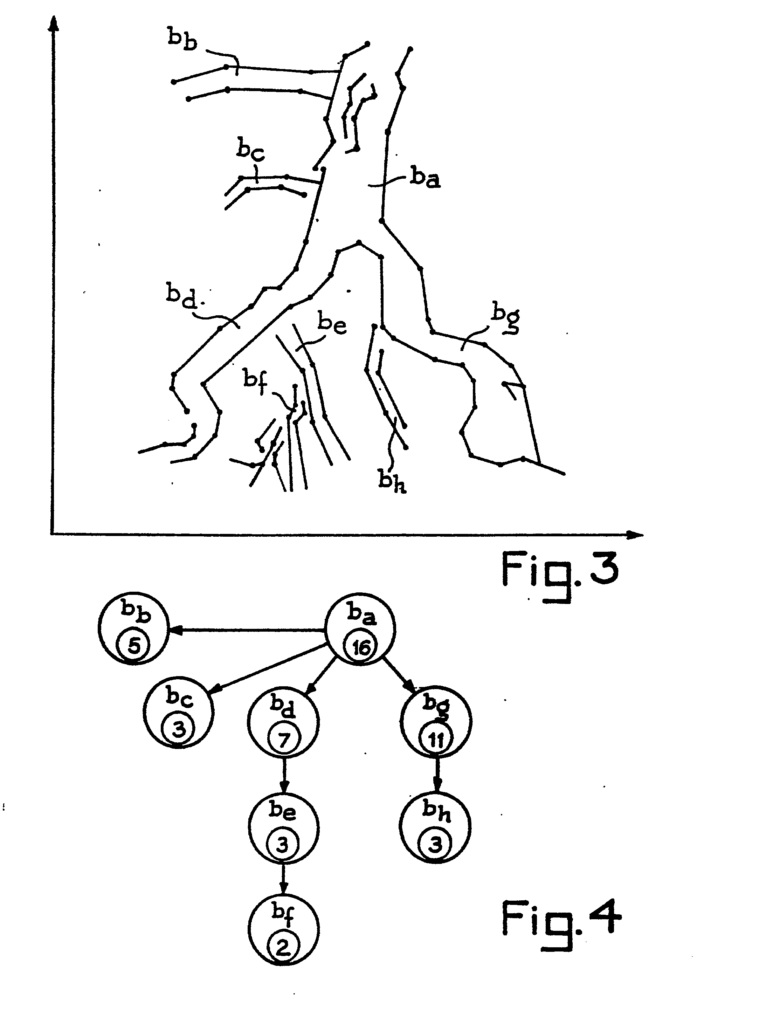

La figure 3 représente un exemple d'arbre objet, T' détecté dans une image numérique, chaque branche $b_j$ ayant un vecteur étiquette $E_j$, j = a, b,..., h. Selon la notation ci-dessus E(T') = $E_a$.

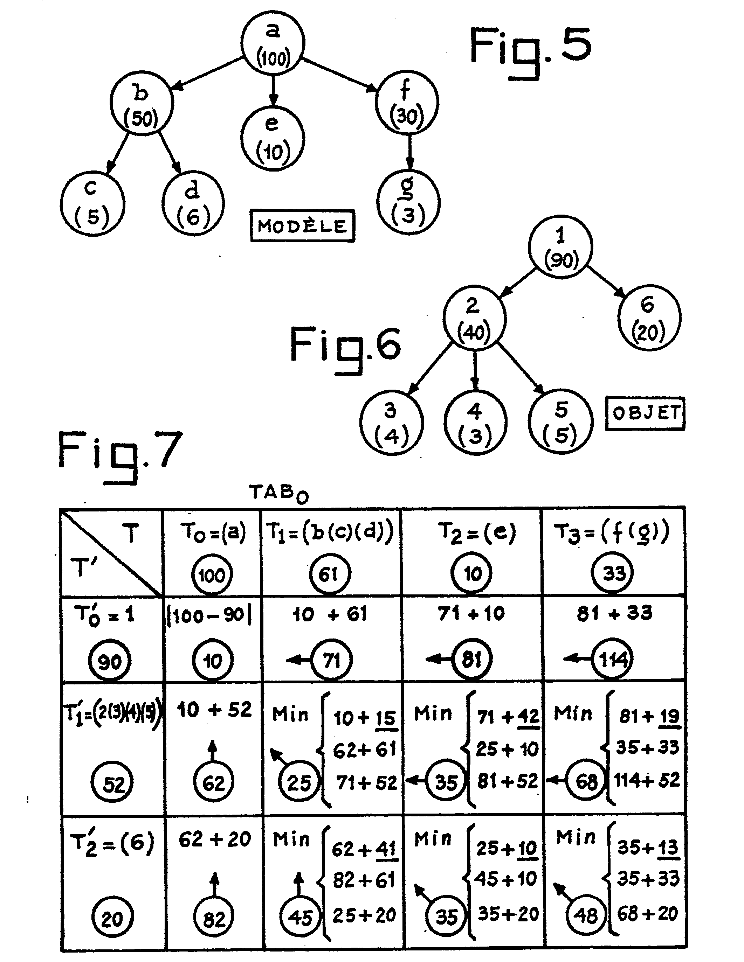

La figure 4 représente le schéma des relations entre ces branches telles qu'elles apparaissent sur la figure 3 : $b_b$,$b_c$,$b_d$ et $b_g$ sont reliées à la racine $b_a$,$b_f$ est reliée à $b_e$ elle même reliée à $b_d$, et $b_h$ est reliée à $b_g$. Chaque branche est un noeud dans ce graphe des relations.

Pour la description de cet arbre modèle T et de l'arbre objet T', chaque arbre est défini comme comportant une suite de sous-arbres disjoints, un ordre étant introduit entre ces sous-arbres : par exemple les sous-arbres sont décrits dans le sens trigonométrique, à partir de la racine à laquelle on donne un sens.

Le modèle T peut alors être représenté par une liste ordonnée L(T) de sous-arbres : L(T) = $(b_1(b_2)(b_3(b_4))$ $(b_5(b_6))$ $(b_7))$, cette liste précise les liaisons entre la racine $T_0$ = $b_1$ et les sous-arbres $T_1$ = $b_2$, $T_2$ = $b_3$ $(b_4)$ $T_3$ = $b_5$ $(b_6)$, et $T_4$ = $b_7$. $T_i$ est le sous-arbre de T d'ordre i. De la même manière, l'arbre des données est représenté par la liste L(T') suivante : L(T') = $(b_a(b_b)$ $(b_c)$ $(b_d(b_e(b_f)))$ $(b_g(b_h)))$, qui précise les liaisons entre la racine $T_0'$ = $b_a$ et les sous-arbres suivants $T_1'$ = $b_b$, $T_2'$ = $b_c$, $T_3'$ = $b_d(b_e(b_f))$ et $T_4'$ = $b_g(b_h)$. Un sous-arbre tel que $T_2$ par exemple comporte lui-même une racine $b_3$ et un sous-arbre $b_4$. Des sous-arbres tels que $b_4$ ou $T_1$ = $b_2$, sont réduits à leurs racines.

Comme indiqué ci-dessus, pour calculer une "distance" entre arbres qui permettra ensuite de rechercher la distance "minimale" aboutissant à l'identification de l'arbre objet à l'arbre modèle, il est nécessaire de définir cette "distance". Un arbre étant défini par la succession des sous-arbres qui le composent, ordonnée comme indiqué dans les listes ci-dessus, il est possible de doter l'ensemble des sous-arbres d'un certain nombre d'opérations qui permettront ensuite de définir la distance entre deux arbres.

On définit d'abord l'égalité entre deux arbres : deux arbres sont dits égaux si leurs racines ont la même étiquette, et si les listes ordonnées de leurs sous-arbres sont identiques.

Trois opérations élémentaires sont alors définies dans l'ensemble des arbres par des opérations sur les étiquettes :

1. Changement d'étiquette d'un arbre :
Un arbre T peut être transformé en un arbre T* par un changement d'étiquette de la manière suivante : l'étiquette de sa racine E(T) est remplacée par l'étiquette de la racine de T*, E(T*) ; la liste des sous-arbres de T* est la même que la liste des sous-arbres de T.

2. L'insertion d'un sous-arbre dans la liste descriptive d'un arbre :
un sous-arbre peut être inséré dans une liste ordonnée de sous-arbres descriptive d'un arbre T, à un rang donné, pour former un arbre modifié T*. L'étiquette de sa racine ne change pas : E(T*) = E(T) et la liste initiale : L(T) = $T_0$, $T_1$...$T_i$, $T_{i+1}$...$T_m$ des sous-arbres de T devient la liste L(T*) après insertion d'un sous-arbre A :
L(T*) = $T_0$, $T_1$,...$T_i$, A, $T_{i+1}$...$T_m$.

3. Destruction d'un sous-arbre $T_i$ dans la liste ordonnée des sous-arbres constituant un arbre T pour former un arbre T* : L'étiquette de la racine ne change pas : E(T*) = E(T), et la liste initiale L(T) = $T_0$ $T_1$... $T_{i-1}$, $T_i$, $T_{i+1}$,...$T_m$ devient après destruction de $T_i$ : L(T*) = $T_0$, $T_1$...$T_{i-1}$, $T_{i+1}$...$T_m$.

A chacune de ces opérations élémentaires est associé un coût qui dépend des valeurs affectées à la racine ou aux différentes branches des sous-arbres insérés ou détruits. La valeur affectée à une branche peut être une combinaison de composantes du vecteur étiquette de cette branche. L'exemple le plus simple consiste à prendre l'une des composantes du vecteur étiquette soit par exemple la largeur des branches.

Pour l'opération de changement d'étiquette, il est nécessaire de disposer d'une matrice des coûts de transformation d'une étiquette $E_i$ en une étiquette $E_j$ soit $C_T$ ($E_i$, $E_j$) pour tous les i et j. Par exemple, ce coût peut être la différence entre les largeurs pour des sous-arbres réduits à des branches.

EP 0 226 507 B1

Pour les autres opérations, destruction et insertion de sous-arbres dans un arbre, il est nécessaire de disposer des coûts élémentaires de destruction et d'insertion d'un arbre réduit à une branche étiquetée $E_i$ : soient $C_D (E_i)$ et $C_I (E_i)$ respectivement ces coûts élémentaires de destruction et d'insertion. Le coût d'insertion $C_I(A)$, d'un sous-arbre A dans une liste ordonnée de sous-arbres est égal à la somme des coûts d'insertion des sous-arbres constitutifs de A. Pour un sous-arbre réduit à une branche ce coût d'insertion est seulement le coût élémentaire indiqué ci-dessus, soit la largeur d'une branche par exemple.

De la même manière, le coût de destruction d'un sous-arbre A est égal à la somme des coûts de destruction des sous-arbres constitutifs du sous-arbre A. Pour un sous-arbre réduit à une branche, ce coût peut être, de la même manière que pour le coût d'insertion, une valeur affectée à cette branche, soit la largeur par exemple.

La mesure de la distance entre deux arbres A et B est alors obtenue au moyen d'un procédé récursif, tel que décrit par l'algorithme de Selkow indiqué ci-dessus qui affecte un coût global aux suites de transformations possibles pour transformer l'arbre A en l'autre B : ces suites de transformations se font par une suite d'opérations élémentaires affectées chacune d'un coût élémentaire. La distance minimale $d(A,B)$ entre les deux arbres étiquetés A et B sera le coût global de la façon la moins coûteuse de transformer l'arbre de départ en l'arbre d'arrivée. Ce coût prend en compte à la fois les modifications de structures, insertions et suppressions de sous-arbres, et les modifications d'étiquettes.

Soient deux arbres, A de sous-arbres, $A_1,...A_m$, et B de sous-arbres, $B_1...B_n$ ; $A_0$ et $B_0$ sont les racines, et $T(i)$ est l'arbre obtenu en enlevant d'un arbre T les sous-arbres de l'ordre $i + 1$ au dernier de la liste : si $T_m$ est le dernier sous-arbre de la liste descriptive de T, on a en particulier $T(m) = T$ et $T(0) = T_0'$ racine de T. Selkow a montré que la distance $d(A, B)$ entre un premier arbre A et un second arbre B est telle que :

$$- d(A(0), B(j)) = C_T (E(A), (E(B))) + \sum_{k=1}^{j} C_I (Bk)$$

$$- d(A(i), B(0)) = C_T (E(A), E(B)) + \sum_{k=1}^{i} C_D (Ak)$$

$$- d(A(i), B(j)) = Min \begin{cases} . d(A(i-1), B(j-1)) + d(Ai, Bj) \\ . d(A(i), B(j-1)) + C_I (Bj) \\ . d(A(i-1)), B(j) + C_D (Ai). \end{cases}$$

L'étude détaillée montre en effet que les opérations, changement d'étiquette, insertion, ou destruction d'un sous-arbre, ne changent jamais l'ordre des sous-arbres. D'où, pour la mesure des distances un calcul de type programmation dynamique.

Le calcul s'en déduit alors immédiatement :

1. Faire pour $j = 0$ à n :

$$d(A(0), B(j)) = C_T (E(A), EB)) + \sum_{k=1}^{j} C_I (Bk)$$

2. Faire pour $i = 0$ à m :

$$d(A(i), B(0)) = C_T (E(A), E(B)) + \sum_{k=1}^{j} C_D (Ak)$$

3. Faire pour $I = 0$ à n :
Faire pour $j = 0$ à m :

4

$$d(A(i), B(j)) = \text{Min} \begin{cases} (d(A(i-1), B(j-1)) + d(Ai, Bj) \, ; \\ d(A(i), B(j-1)) + C_I \, (Bj) \, ; \\ d(A(i-1), B(j)) + C_D \, (Ai) \end{cases}$$

Ce calcul est récursif puisqu'il est nécessaire de calculer $d(Ai, Bj)$ pour calculer $d(A(i), B(j))$, Ai et Bj étant eux-mêmes des arbres.

Les figures 5 et 6 représentent respectivement un autre exemple d'arbre modèle et d'arbre objet auquel on doit l'identifier.

L'exemple de calcul qui suit appliqué aux arbres représentés par les schémas des figures 5 et 6 illustre le calcul de distance selon la méthode, connue en elle-même, décrite ci-dessus.

La valeur d'une branche est notée entre parenthèses dans les noeuds représentés sur les figures 5 et 6 sous l'étiquette de la branche notée seulement par son indice a à g dans l'arbre modèle et 1 à 6 dans l'arbre des données.

On définit les coûts suivants :
. Coût de changement d'étiquette $C_T$ (Ei, Ej) = | Ci - Cj |
. Coût d'insertion = coût de destruction = Ck.

La solution est représentée dans une suite de tableaux sur les figures 7 à 12. Le tableau $TAB_0$ permet de calculer les distances entre les sous-arbres des premières listes. L'arbre modèle est représenté par la liste $L(T) = (a(b(c)(d))(e)(f(g)))$ avec les sous-arbres suivants :
- a racine ; $T_0$ ;
- b(c)(d) sous-arbre $T_1$, (c) et (d) sous-arbres de $T_1$ ;
- (e) sous-arbre $T_2$ ; pas de sous-arbre ;
- f(g) sous-arbres $T_3$ ; (g) sous-arbre de $T_3$ ;
De même l'arbre des données est représenté par la liste $L(T') = (1(2(3)(4)(5))(6))$ ;
- 1 : racine $T'_0$ ;
- 2(3)(4)(5) sous-arbre $T'_1$, (3), (4) et (5) étant des sous-arbres ;
- (6) sous-arbre $T'_2$ ; pas de sous-arbre.

La figure 7 représente le premier tableau illustrant la solution : $TAB_0$. Les entrées de ce tableau sont en ligne, la liste des sous-arbres de T et en colonne la liste des sous-arbres de T'. Pour chaque sous-arbre a été calculée une valeur égale à la somme des valeurs des branches et indiquée sous le sous-arbre correspondant ; ces valeurs sont cerclées.

Sur la première ligne apparaissent les distances calculées entre la racine $T'_0$ et les arbres T(0), T(1), T(2), T(3) = T, ces distances sont calculées dans la première phase de calcul : $d(T'(0) ; T(j))$.

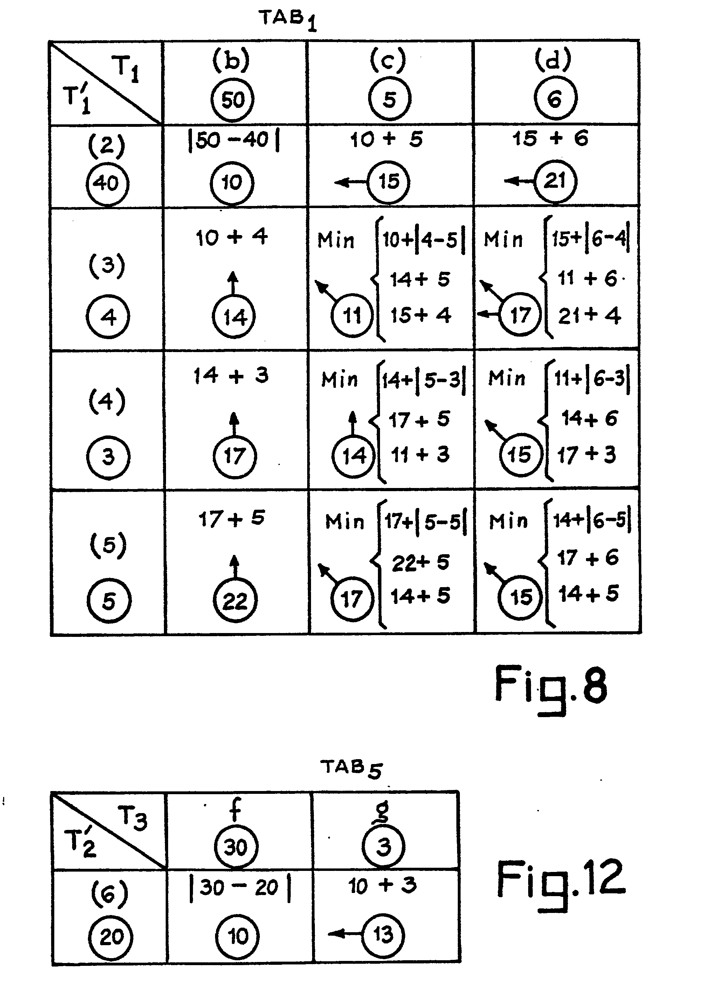

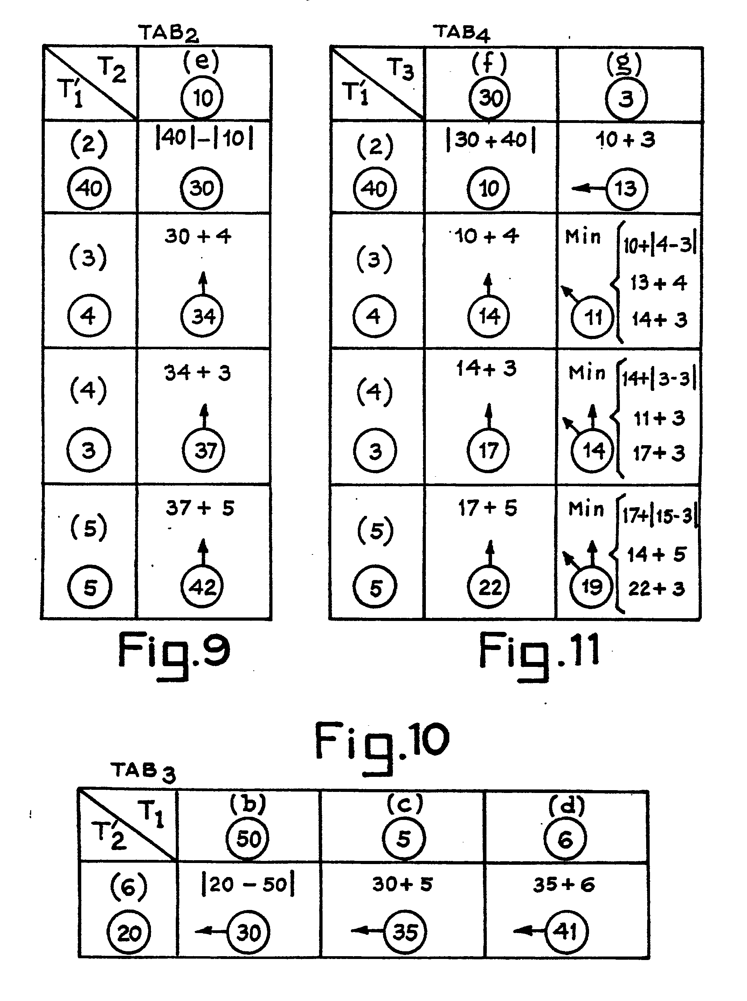

De même, dans la première colonne apparaissent les distances calculées entre la racine $T_0$ et les arbres T'(0), T'(1), T'(2) = T', ces distances sont calculées dans la seconde phase de calcul $d(T'i), T(0)$. Les autres calculs sont faits dans la troisième phase en utilisant éventuellement les calculs intermédiaires nécessaires tels qu'il ressort des tableaux suivants. Le tableau $TAB_1$ représenté sur la figure 8 permet de calculer la distance minimale entre $T_1$ et $T'_1$, soit $\underline{15}$ ; le tableau TAB 2 représenté sur la figure 9 permet de calculer la distance entre $T_2$ et $T'_1$ soit $\underline{42}$ ; le tableau $TAB_3$ représenté sur la figure 10 illustre le calcul de la distance entre $T_1$ et $T'_2$, soit $\underline{41}$ ; le tableau $TAB_4$ représenté sur la figure 11 illustre le calcul de la distance minimale entre $T_3$ et $T'_1$, soit $\underline{19}$ ; et le tableau $TAB_5$ de la figure 12 illustre le calcul de la distance entre $T_3$ et $T'_2$, soit $\underline{13}$ ; la distance entre $T_2$ et $T'_2$ est obtenue immédiatement du fait que les 2 sous-arbres sont réduits à leurs racines par la différence des valeurs (20 + 10) soit $\underline{10}$. Ces valeurs soulignées dans $TAB_0$ sont alors utilisées pour le calcul final de la distance minimale entre les arbres T' et T tel qu'illustré par le tableau $TAB_0$ de la figure 7. La distance minimale ainsi obtenue est $\underline{48}$ dans l'exemple illustré par les figures 5 à 12.

Le problème à résoudre alors est d'identifier les noeuds objet et modèle à partir de ces résultats, c'est-à-dire remonter le chemin qui a conduit à l'obtention de la distance minimale entre l'arbre objet et l'arbre modèle. Pour cela chaque coût obtenu à une phase de calcul est affecté dans la case correspondante d'une flèche indiquant les choix effectués à chaque étape lors des tests sur les coûts minimaux, ou la provenance de la valeur prise comme valeur de départ pour le calcul de coût lorsqu'il n'y a pas eu de choix.

La méthode pour retrouver le chemin conduisant à la distance minimale consiste à remonter le chemin en suivant les flèches reliant les coûts, ce qui donne dans l'exemple ci-dessus les associations suivantes obtenues à la lecture du tableau $TAB_0$ :
. $T'_2 = T_3$ ; coût : 13 (coût complexe)
. insérer $T_2$ ; coût : 10 (coût d'insertion)
. $T'_1 = T_1$ ; coût : 15 (coût complexe)
. $T'_0 = T_0$ ; coût 10 (par changement d'étiquette).
Soit un coût total, égal à 48.

L'identification n'est pas terminée car les changements d'étiquette $T'_1 = T_1$ et $T'_2 = T_3$ sont des opéra-

tions complexes qui doivent être décomposées. Les décompositions résultent de la lecture du tableau TAB₁ pour l'identification $T'_1 = T_1$ et de la lecture du tableau 5 pour l'identification $T'_2 = T_3$.

Par le tableau TAB₁ de la figure 8 on obtient :

(5) = (d) changement d'étiquette : coût 1

(4) détruit : coût de destruction : 3

(3) = (c) changement d'étiquette : coût 1

(2) = (b) changement d'étiquette : coût complexe 15.

Par le tableau TAB₅ de la figure 12 on obtient :

insérer (g) (non retrouvé dans l'arbre objet) : coût 3

(6) = (f)changement d'étiquette coût complexe 13.

L'identification est alors complète puisque réalisée jusqu'au niveau des branches.

D'une manière plus générale, pour obtenir l'identification entre un arbre objet et un arbre modèle, représentés par des listes ayant comme premier élément la racine et comme éléments suivants les sous-arbres, si les indices i = 1 à n correspondent aux sous-arbres de l'arbre modèle et j-1 à n aux sous-arbres de l'arbre objet, comme indiqué ci-dessus, le chemin ayant permis d'aboutir à la distance minimale est remonté à partir de (m, n).

La description qui suit décrit l'application de ce procédé à un dispositif de traitement d'images, notamment pour des images obtenues par angiographie numérique. L'angiographie est une technique radiologique de visualisation des vaisseaux sanguins dont le principe est le suivant : un produit de contraste est injecté dans un vaisseau et on prend, à intervalles de temps réguliers, des radiographies de la région du corps à examiner. La séquence d'images obtenues par soustraction avec une image de référence, prise avant injection du produit de contraste, fournit l'image des vaisseaux et donne des indications sur la vitesse de propagation du produit de contraste dans ces vaisseaux.

Cet examen est utilisé pour détecter des pathologies, principalement les sténoses (obstruction) ou les anévrismes (dilatation) de ces vaisseaux.

L'examen se fait actuellement de manière entièrement manuelle. Dans le but d'automatiser un tel examen, une première étape consiste à reconnaître de manière automatique les vaisseaux par rapport à un modèle anatomique du réseau sanguin dans la région d'examen considérée.

Les différentes phases du traitement utilisé sont les suivantes :

1. Choix dans la séquence d'images différence d'une image présentant un bon contraste.

2. Détection des contours, filtrage, pontage et paramétrisation de ces contours.

3. Détection des vaisseaux.

4. Formation de l'arbre des relations entre vaisseaux.

5. Mise en correspondance de l'arbre vasculaire détecté et du modèle anatomique mis sous la même forme.

La méthode décrite précédemment est utilisée pour réaliser cette dernière phase de mise en correspondance. Les phases préalables 1 à 3, nécessaires à la formation dans les images numériques des structures arborescentes sont en dehors du cadre de la présente invention. Pour l'application du procédé d'identification selon l'invention les éléments suivants sont considérés pour la formation de la structure modèle : le réseau artériel a naturellement une structure d'arbre en trois dimensions. Si l'on prend comme racine la plus grosse artère, celle-ci se divise ensuite en vaisseaux plus petits et ainsi de suite. L'image angiographique correspond à la projection de cette structure sur un plan. Pour une même région, les images obtenues peuvent être très différentes suivant l'orientation de ce plan de visualisation. On considérera donc un modèle différent pour chaque type d'angiographie (région d'intérêt et angle de visualisation). Ces modèles sont fournis par les praticiens.

Le modèle sous forme d'arbre pour l'application du procédé est constitué de la manière suivante :

La plus grosse artère correspond à la racine de l'arbre. Les vaisseaux qui en partent sont les branches, reliées à la racine par un arc, et ils sont eux-mêmes racines des sous-arbres formés par leurs vaisseaux affluents.

Un ordre est introduit sur ces sous-arbres. Par exemple, on parcourt les sous-arbres dans le sens trigonométrique à partir de la racine orientée dans le sens de la circulation du sang. Comme indiqué ci-dessus chaque branche de l'arbre est étiquetée par un ensemble de paramètres caractéristiques du vaisseau qu'il représente. Cette étiquette est en fait un vecteur constitué d'un certain nombre de composantes telles que largeur, longueur, forme etc... avec également le nom du vaisseau considéré.

Les données extraites de l'image angiographique doivent être naturellement structurées de la même manière. C'est l'étape 4 indiquée ci-dessus appelée "formation de l'arbre des relations entre vaisseaux" au paragraphe précédent. Il faut déterminer les liaisons entre vaisseaux et le sens de ces liaisons et lever les différentes indéterminations (croisement ou jonction, sens).

On arrive alors a une description de l'image à étiqueter sous forme d'arbre où chaque branche est également représentée par un vecteur de composantes de même structure que celui caractérisant les branches du modèle.

Pour utiliser la méthode de mise en correspondance décrite précédemment, il faut définir les différents coûts élémentaires : coût de changement d'étiquette, coût d'insertion et coût de destruction. Ces coûts sont calculés à partir du vecteur étiquette associé à chaque branche.

A titre d'exemple, comme indiqué ci-dessus, les coûts d'insertion ou de destruction sont égaux à la largeur de vaisseau, et le coût de substitution à la valeur absolue de la différence des largeurs des deux vaisseaux considérés.

Pour la simulation, une image test du type de celle représentée sur la figure 3 a été choisie, faisant apparaître un grand nombre de vaisseaux et donnant donc un arbre assez complet. De plus, des segments parasites et des trous dans les contours ont été introduits pour se rapprocher d'un cas réel.

Le modèle choisi pour effectuer la mise en correspondance correspond à l'arbre représenté sur la figure 2. Une représentation possible est donnée figure 1. Pour que le test soit assez critique, le modèle choisi était assez différent des données : la branche $b_7$ du modèle n'apparaît pas dans les données ; les branches bc et bf des données n'apparaissent pas dans le modèle).

Le résultat de l'association obtenue est : $b_a = b_1$ : $b_b = b_2$, $b_3 = b_d$, $b_4 = b_e$, $b_5 = b_h$, $b_6 = b_g$. Tous les vaisseaux de l'image des données existant sur le modèle ont bien été identifiés. Les autres ont été détectés comme devant être détruits ou insérés dans le processus de mise en correspondance.

De même, l'application du procédé à des données réelles a permis de montrer la validité du procédé.

L'invention n'est pas limitée au procédé tel que décrit dans ses détails, ni à son application à des images numériques angiographiques.

## Revendications

1. Procédé d'identification de structures arborescentes par lequel les branches d'un arbre objet peuvent être identifiées à celles d'un arbre modèle, ces deux arbres étant définis sous forme d'une racine et d'une liste de sous-arbres disjoints, formés chacun de la même manière ou éventuellement réduits à une branche, et chacune des branches étant affectée d'un vecteur étiquette dont les composantes sont fonction des caractéristiques de ces branches, au cours duquel:
   – dans une première phase, l'arbre objet est transformée en l'arbre modèle par une suite d'opérations élémentaires sur l'ensemble de sous-arbres, chaque opération étant affectée d'un coût fonction des composantes des vecteurs étiquettes des branches constituant les sous-arbres, ces opérations étant soit des changements d'étiquette, soit des insertions de sous-arbres de l'arbre modèle, soit des destructions de sous-arbres de l'arbre objet, et la suite d'opérations la moins coûteuse est sélectionnée dont le coût global mesure la distance entre les arbres selon la méthode itérative dite de "Selkow", caractérisé en ce que pour l'identification de structures arborescentes détectées dans des images numériques il reprend, dans une seconde phase, la suite d'opérations la moins coûteuse en sens inverse à partir de la dernière opération effectuée, de façon à réaliser, pour chaque étape du calcul itératif, et selon l'opération élémentaire qui a permis d'obtenir le coût minimal
   – soit un changement d'étiquette: un sous-arbre de l'arbre objet étant identifié à un sous-arbre de l'arbre modèle;
   – soit l'insertion d'un sous-arbre de l'arbre modèle, dans ce cas il n'y a pas de sous-arbre correspondant dans l'arbre objet;
   – soit la destruction d'un sous-arbre de l'arbre objet; dans ce cas il n'y a pas de sous-arbre correspondant dans l'arbre modèle;
   le résultat de l'identification étant formé par l'ensemble des étiquettes de l'arbre modèle affectées aux sous-arbres de l'arbre objet réduits à leur racine obtenus dans cette seconde phase.

2. Application du procédé selon la revendication 1 à des images obtenues par angiographie numérique pour l'identification des vaisseaux sanguins.

## Claims

1. A method for identifying tree structures, wherein the branches of an object tree can be identified to those of a model tree, these two trees being defined in the form of a root and of a list of distinct subtrees, each constituted in the same way or, as the case may be, reduced to one branch, and each of the branches being affected with a label vector whose components depend on the characteristics of these branches, the method comprising
   – a first method phase, in which the object tree is transformed into the model tree by a succession of elementary operations applied to the assembly of sub-trees, wherein to each operation a cost value is assigned depending on the components of the label vectors of the branches constituting the sub-trees, these operations being either label changes or insertions of sub-trees of the model tree or else destructions of sub-trees of the object tree, and the minimum cost sequence is selected whose global cost measures the distance between the trees according to the iterative method called "Selkow"-method, characterized in that, for the identification of tree structures detected in digital pictures, the minimum cost sequence of operations is repeated in a second method phase in opposite direction starting from the last performed operation in order to realise, for each step of the iterative calculation and according to the elementary operation which has allowed to obtain the minimum cost,

– either a label change whereby a sub-tree of the object tree is identified to a sub-tree of the model tree,
– or the insertion of a sub-tree of the model tree, in which case there does not exist a corresponding sub-tree in the object tree,
– or else the destruction of a sub-tree of the object tree, in which case there is no corresponding sub-tree in the model tree,
the result of the identification being constituted by the group of labels of the model tree attributed to the object tree sub-trees which are reduced to their root and obtained in this second phase.

2. The application of the method according to claim 1 to pictures obtained by a digital angiography for the identification of blood vessels.

**Patentansprüche**

1. Verfahren zum Identifizieren von Baumstrukturen, demgemäß die Zweige eines Objektbaums denen eines Modellbaums gleichgesetzt werden können und die beiden Bäume in Form einer Wurzel und einer Liste getrennter Unterbäume definiert sind, die je in gleicher Weise aufgebaut oder ggfs. auf einen einzigen Zweig reduziert sind, wobei jeder der Zweige mit einem Etikettenvektor versehen ist, dessen Komponenten von den Kennwerten dieser Zweige abhängen,
– wobei in einer ersten Verfahrensphase der Objektbaum in den Modellbaum durch eine Folge von auf die Gesamtheit der Unterbäume angewendeten Elementaroperationen umgewandelt wird und jeder Operation ein von den Komponenten der Etikettenvektoren der die Unterbäume bildenden Zweige abhängender Kostenwert zugeordnet wird, wobei diese Operationen entweder Etikettenwechsel oder Einfügungen von Unterbäumen des Modellbaums oder Entfernungen von Unterbäumen des Objektbaums sind und wobei die am wenigsten kostenträchtige Folge von Operationen ausgewählt wird, deren Gesamtkosten den Abstand zwischen den Bäumen nach der iterativen sogenannten "Selkow"-Methode angeben, dadurch gekennzeichnet, daß für die Identifizierung von in digitalen Bildern erfaßten Baumstrukturen in einer zweiten Verfahrensphase die Folge von Operationen mit den geringsten Kosten in umgekehrter Richtung ausgehend von der letzten durchgeführten Operation wiederaufgenommen wird, und zwar für jede Stufe des iterativen Rechenvorgangs und gemäß der Elementaroperation, die zur Ermittlung der Minimalkosten geführt hat,
– entweder ein Etikettenwechsel, indem ein Unterbaum des Objektbaums einem Unterbaum des Modellbaums gleichgesetzt wird,
– oder eine Einfügung eines Unterbaums in den Modellbaum, wobei in diesem Fall im Objektbaum kein entsprechender Unterbaum existiert,
– oder die Entfernung eines Unterbaums aus dem Objektbaum, wobei in diesem Fall im Modellbaum kein entsprechender Unterbaum existiert,
– wobei das Ergebnis der Identifizierung von der Gesamtheit der Etiketten des Modellbaums gebildet wird, die den auf ihre Wurzel reduzierten Unterbäumen des Objektbaums, die in der zweiten Phase erhalten werden, zugeordnet sind.

2. Anwendung des Verfahrens nach Anspruch 1 auf Bilder, die durch digitale Angiographie zur Identifizierung von Blutgefäßen erhalten werden.

Fig.1

Fig.2

Fig. 3

Fig. 4

EP 0 226 507 B1

# Fig.5

MODÈLE

# Fig.6

OBJET

# Fig.7

TAB$_0$

| T \ T' | $T_0=(a)$ (100) | $T_1=(b(c)(d))$ (61) | $T_2=(e)$ (10) | $T_3=(f(g))$ (33) |
|---|---|---|---|---|
| $T'_0=1$ (90) | \|100−90\| → (10) | 10 + 61 ← (71) | 71 + 10 ← (81) | 81 + 33 ← (114) |
| $T'_1=(2(3)(4)(5))$ (52) | 10 + 52 ↑ (62) | Min { 10+15, 62+61, 71+52 } ↖ (25) | Min { 71+42, 25+10, 81+52 } ← (35) | Min { 81+19, 35+33, 114+52 } ← (68) |
| $T'_2=(6)$ (20) | 62 + 20 ↑ (82) | Min { 62+41, 82+61, 25+20 } ↑ (45) | Min { 25+10, 45+10, 35+20 } ↖ (35) | Min { 35+13, 35+33, 68+20 } ↖ (48) |

TAB₁

| T'₁ ╲ T₁ | (b) (50) | (c) (5) | (d) (6) |
|---|---|---|---|
| (2) (40) | \|50 −40\| (10) | 10 + 5 ←(15) | 15 + 6 ←(21) |
| (3) (4) | 10 + 4 ↑(14) | Min { 10+\|4−5\| ; 14+5 ; 15+4 } ↖(11) | Min { 15+\|6−4\| ; 11+6 ; 21+4 } ↖←(17) |
| (4) (3) | 14 + 3 ↑(17) | Min { 14+\|5−3\| ; 17+5 ; 11+3 } ↑(14) | Min { 11+\|6−3\| ; 14+6 ; 17+3 } ↖(15) |
| (5) (5) | 17 + 5 ↑(22) | Min { 17+\|5−5\| ; 22+5 ; 14+5 } ↖(17) | Min { 14+\|6−5\| ; 17+6 ; 14+5 } ↖(15) |

Fig.8

TAB₅

| T'₂ ╲ T₃ | f (30) | g (3) |
|---|---|---|
| (6) (20) | \|30 − 20\| (10) | 10 + 3 ←(13) |

Fig.12

TAB₂

| T'₁ \ T₂ | (e) 10 |
|---|---|
| (2) 40 | \|40\|-\|10\| 30 |
| (3) 4 | 30 + 4 ↑ 34 |
| (4) 3 | 34 + 3 ↑ 37 |
| (5) 5 | 37 + 5 ↑ 42 |

# Fig.9

TAB₄

| T'₁ \ T₃ | (f) 30 | (g) 3 |
|---|---|---|
| (2) 40 | \|30 + 40\| 10 | 10 + 3 ← 13 |
| (3) 4 | 10 + 4 ↑ 14 | Min ↙ 11 { 10+\|4-3\| , 13 + 4 , 14 + 3 } |
| (4) 3 | 14 + 3 ↑ 17 | Min ↙ ↑ 14 { 14+\|3-3\| , 11 + 3 , 17 + 3 } |
| (5) 5 | 17 + 5 ↑ 22 | Min ↙ ↑ 19 { 17+\|15-3\| , 14 + 5 , 22 + 3 } |

# Fig.11

# Fig.10

TAB₃

| T'₂ \ T₁ | (b) 50 | (c) 5 | (d) 6 |
|---|---|---|---|
| (6) 20 | \|20 - 50\| ← 30 | 30 + 5 ← 35 | 35 + 6 ← 41 |